# EUROPEAN PATENT SPECIFICATION

(11) **EP 3 019 018 B1**
(45) Date of publication and mention of the grant of the patent: **26.12.2018**
(21) Application number: 14736824.5
(22) Date of filing: 08.07.2014
(51) Int. Cl.: A22C 17/00, B07C 5/20

(54) **A TRIM MANAGEMENT SYSTEM (TMS) AND A METHOD FOR PROCESSING OF MEAT TRIM PRODUCTS**
SCHNITTVERWALTUNGSSYSTEM UND VERFAHREN ZUR VERARBEITUNG VON FLEISCHSCHNITTPRODUKTEN
SYSTÈME DE GESTION DE CHUTES DE PARAGE ET PROCÉDÉ DE TRAITEMENT DE PRODUITS DE CHUTES DE PARAGE DE VIANDE

(30) Priority: 08.07.2013 EP 13175566
(43) Date of publication of application: 18.05.2016
(73) Proprietor: Marel Iceland EHF, 210 Gardabaer (IS)
(72) Inventor: ÞÓRSSON, Brynjólfur, 108 Reykjavík (IS)
(74) Representative: Inspicos P/S
(86) International application number: PCT/EP2014/064620
(87) International publication number: WO 2015/004139

(56) References cited:
- EP-A1- 2 233 400
- US-A1- 2007 293 980
- US-A1- 2009 214 724
- US-A1- 2011 062 257
- US-A1- 2011 105 001

## Description

### FIELD OF THE INVENTION

The present invention relates to a trim management system (TMS) and a method for processing of meat trim products, where the meat trim products are supplied as a sequence of collections of trim (COTs).

### BACKGROUND OF THE INVENTION

WO2011138052 describes a Trim Management Systems (TMSs) where fat/meat relationship, often referred as Chemical Level (CL), of incoming sequence of collections of trim (COTs) is determined with an X-ray. The fat/meat relationship and the weight of the incoming COTs is used to select the appropriate bins that are arranged along a conveyor with the aim of fulfilling a pre-defined fat/meat relationship targets.

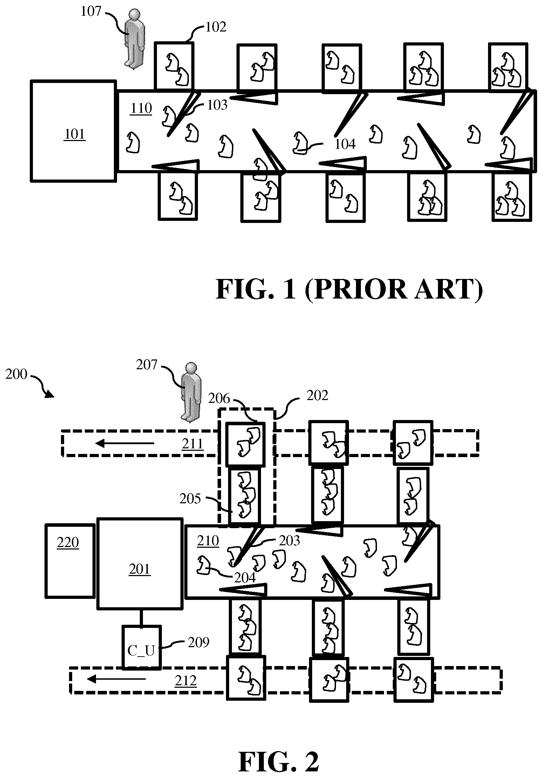

Figure 1 shows an example of a Trim Management Systems (TMSs) comprising a X-ray apparatus 101 that measures the fat/meat relationship of the incoming COTs, but the X-ray apparatus may also be utilized to determine the weight of the incoming COTs. The weight of these incoming COTs is typically in the range of 1-8kg. In this example, the number of receiving bins 102 is ten, where each receiving bin is provided with a packing arrangement at the bottom of the bins for e.g. plastic bags, where fixed portions having fixed weight target and fat/meat relationship targets are made. A control unit selects the appropriate bins based on the determined fat/meat relationship and the weight of the COTs. A common weight of such portions in the bags is 10g. The operation of the TMS shown in figure 1 is typically such that one operator 107 manages several bins, e.g. two operators may operate the opposite sides of the TMS. The bins are typically provided with a shutter that is open during filling the bags with the COTs. Based on the determined weight of the COTs the system knows at all times the weight of the COTs in the bins/bags at all times. When e.g. the weight of the COTs in bin 101 has reached its weight target of 10kg the operator at this side is informed accordingly e.g. via illuminating a light source that is proved at the bin and the TMS automatically closes the shutter. The operator then removes the bag from the bin 101 and e.g. places it onto a take-away conveyor (not shown). During this time, the bin 101 acts as a buffer where COTs are being collected having appropriate fat/meat relationship and weight. After placing a new bag at the bin 101 the operator pushes an opening button on the bin 101 that opens the shutter and the COTs that have during this time been accumulated in the bin-buffer are released into the bag. The shutter stays open until the weight target and the fat/meat relationship target has been reached at this bin. This is repeated for all the bins shown here.

Let's say that a client has made an order of 100kg target batch with a fat/meat relationship target of 20% (20% fat and 80% meat), at least some of the receiver bins, e.g. the first four receiver bins, participate in reaching this target while e.g. the remaining bins are utilized for another order from e.g. another client having e.g. a different target. This means that in total approximately 10 bags are generated to complete this target batch of 100kg. The problem with this arrangement is that it is almost impossible to reach both a weight target and simultaneously a CL target at each bin without rejecting a large amount of the incoming COTs, because each COT acts in a way as a single piece although it is typically made of many trim pieces that may vary in weight from several grams up to several hundred of grams. The fact that the weight target at each receiver bin is typically around 10kg and the weight distribution of the incoming COTs is 1-8kg makes it difficult if not impossible to reach the 10kg target without rejecting much of the incoming COTs.

Referring to the previous example, the weight variation of the 10 bags will be inconsistent, which makes it difficult to pack the bags into box having standardized sizes, because some of the bags may simply be too large and some will be too small. Also, many customers require that the weight of the bags is uniform, e.g. bags that are 5.0kg±0.1kg, but in order to reach such a uniform weight distribution much of the trim must be rejected. One alternative solution to reduce the reject of the trim is to increase the number of the bins, but at the price of a more spacious TMS. Another alternative solution would be to make the COTs smaller, e.g. less than 2kg, so that each 10kg bag would be based on approximately 5COTs. However, this will limit the throughput of the TMS severely because the number of COTs that the system can handle every minute is close to being constant, i.e. x-many COTs can go through the system per minute. Thus, if the TMS gives 35COTs/min then the throughput of the system is 70kg/min. Therefore, it is obviously not acceptable to make the COTs too small at the cost of the throughput of the system.

US 2011/0062257, upon which the preamble of claim 1 is based, discloses a method for sorting meat trim portions by employing quantitative leans point analysis and one or more sorting steps. Embodiments of this disclosure are adapted to make lean point determinations, to compare the determinations to one or more sorting parameters, and to direct meat trim portions to one or more sorting parameters, and to direct meat trim portions to one of a plurality of containers based on the comparison. These batches generated in these containers are commonly large, e.g. 1000kg, but such large batches can be undesirable towards customers, especially customers outside of US where such large batches must be divided into smaller sub-batches, e.g. 20kg sub-batches (in US it is common to make such large batches without splitting them up into smaller sub-batches). Another problem associated with making such large batch without splitting it up into smaller sub-batches is the scenario where the customer wants to freeze the batch, but freezing such 1000kg batch can be very difficult.

US 2009/0214724 discloses a meat packing system, a kind of a flow control system, where meat products are provided to an automated bagging system in a controlled and managed manner. Packaging systems in accordance with this disclosure include one or more buffering systems capable of controlling the flow of meat products to a bagging system by means of converting flow of randomly spaced meat products to a regular flow of meat products having a predetermined minimum spacing that are subsequently transported to a packing station. Accordingly, this disclosure deals with converting randomly spaced meat products to a regular flow where the space is sufficient such that automatic bagging of the meat can take place. According to the disclosure of US 2009/0214724, a sorting system may be provided near the food source, before items of food are provided to a buffering system, after the buffering system, and associated with a bag loader or vacuum packaging device.

### SUMMARY OF THE INVENTION

On the above background it is an object of embodiment of the present invention to provide an improved TMS that is more compact, where the amount of trim that is rejected is greatly reduced and that is capable of making uniform weight distribution of the bags and has the capability to increase throughput.

In one embodiment of the invention, it would be advantageous to achieve an improved Trim Management System (TMS) that is more compact, has higher throughput and where the amount of trim that is rejected is reduced. In general, the invention preferably seeks to mitigate, alleviate or eliminate one or more of the above mentioned disadvantages singly or in any combination. In particular, it may be seen as an object of the present invention to provide a TMS that solves the above mentioned problems, or other problems, of the prior art.

To better address one or more of these concerns, in a first aspect of the invention a Trim Management System (TMS) for processing of meat trim products according to claim 1 is provided.

Since the COTs at the buffer means form a one big lump of trim products it is now possible to divide the target batches at each individual receiver station into sub-batches that e.g. fulfill one or more pre-defined criteria, e.g. fixed weight of the sub-batches and/or similar volume and the like. In preferred embodiments of the present invention, the receiver means and the buffer means are entirely integrated at the receiver station. At the receiver stations, sub-batches may be formed, wherein each sub-batch comprises a plurality of COTs, which all together fulfill at least one criterion, which is fulfilled by all sub-batches formed at the receiver station. The system according to the present invention may comprise a take-away conveyor for conveying the sub-batches formed at each receiver station away from the receiver stations for subsequent processing, such as packaging thereof at a station remote from the receiver station.

Moreover, each receiver station has now the capacity to complete a given target batch, instead of utilizing several receiving bins arranged along the conveyor means to make the target batch, which makes the TMS according to the present invention more compact. Also, the throughput of the TMS system is significantly increased because there is no weight boundaries of the incoming COTs meaning that the weight of the incoming COTs may e.g. be above 1kg, e.g. 5kg, 10kg, or even more, assuming the target batch is well above this weight, e.g. 500kg. As an example, if the TMS gives 35COTs/min and the COTs have an average weight of 20kg, then the throughput of the TMS is 700kg/min.

Also, typically very few COTs must be rejected because of e.g. being too heavy or not having the appropriate fat/meat relationship because the fat/meat relationship of the accumulated COTs at the buffer means does not depend on individual COTs but on the total fat/meat relationship of the accumulated COTs. Here it is of course assumed that the final weight target is much larger than the weight of the individual COTs, e.g. 500kg or even more.

The conveyor means and the buffer means may both be any type of a conveying system, e.g. a conveyor including a conveyor belt. The buffer means may also be a chute like structure or the like for accumulating the COTs. Such a structure may e.g. be arranged in a declined way such that the incoming COTs slides down towards to receiver means via gravity.

The diverting means may as an example be selected from, but is not limited to: separator arms, shooting conveyors and openable/closeable conveyors.

In one embodiment, at least one of the receiver means comprises a weighing hopper and where the plurality of sub-batches have pre-defined weight target. A bag or box-mounting unit may in one embodiment be arranged below the weighing hopper. An openable and closeable bottom unit adapted to switch between an open position and a closed position may be arranged between the bag or box-mounting unit and an open upper end for collecting the COTs into the weighing hopper and for releasing the COTs from the weighing hopper into the bag or box. The openable and closeable bottom unit may in one embodiment be manually controlled. This could e.g. be via on/off button where an operator monitors the weight in the hopper and releases the trim from the hopper when the weight has reached a pre-defined target.

Accordingly, an operator at a given receiver station may now manually or semi-manually generate sub-batches having a fixed weight target of e.g. 10kg simply by taking trim from the buffer means and manually move it into the weighing hopper where the weight of the sub-batches in the weighing hopper is continuously monitored by the operator. Thus, the operator can take smaller trim portions from the COTs from the buffer means and put it into the weighing hopper, or vice verse, from the weighing hopper back to the buffer means, to reach the sub-batches weight target. Accordingly, according to the present invention each individual COT is no longer considered as a single portion/unit (one entity) that cannot be sub-divided into smaller portions/trims, but the accumulated COTs at the buffer means form a big lump of the trim products which allows an operator to reach an exact weight target of the sub-batches.

In one embodiment, the at least one of the receiver means comprises means for generating said sub-batches based on at least one criterion. This criteria may in one embodiment comprises a pre-defined weight criterion.

In one embodiment, the plurality of sub-batches have pre-defined volume target.

In one embodiment, the receiver means is a bag or box. The bag or box may e.g. rest on a weighing device where an operator may e.g. manually put trim from the buffer means into the bag or box, or from the bag or box back to the buffer means if the weight in the bag or box exceeds the weight target, and manually generate a sub-batch that fulfills a pre-defined criterion such as a weight criterion. Based on the above, a simple and economical solution is provided to make such sub-batches fulfill pre-defined weight target. As already addressed, according to the present invention the COTs on the buffer means form in a way one big lump of small trim portions meaning that the operator can typically find a trim portion to complete a given sub-batch of e.g. 10kg weight accurately (may of course be more or less than 10kg).

Based on the above, it is possible to break a given target batch, e.g. having a weight target of 100kg and fat/meat relationship target of e.g. 20% (80% meat vs. 20% fat), into 20kg boxes each of which contain e.g. two bags of 10kg that may e.g. be vacuum packed. The volume of the boxes may thus be minimized and adapted to these 10kg bags leaving almost no empty volume.

This may also be desirable for a customer that e.g. intends to grind only 50kg of trim knowing that 5 such bags will constitute these 50kg of trim, withough having to check that out, also knowing that each of these 5kg boxes may have very similar fat/meat relationship.

In one embodiment, a take-away conveyor is provided that receives the sub-batches and conveys them to e.g. a packing area or directly into a freezer. The take-away conveyor may as an example be placed under the weighing hopper so that sub-batches may be released directly onto the take-away conveyor. The take-away conveyor may also be provided with means for receiving the sub-batches, such as pan-like structures for preventing the trim in the sub-batches to fall off the take-away conveyor.

In one embodiment, the buffer means comprises a buffer conveyor operated by the control unit by means of adapting the conveying speed of the buffer conveyor to the accumulated weight of the trim via either halting the buffer conveyor, or adjusting the speed of the buffer conveyor. By implementing a buffer conveyor as a buffer means the advancing of the accumulated COTs may be fully controlled, e.g. by stopping the buffer conveyor automatically when a certain weight of trim has been reached in the weighing hopper, which allows an operator to adjust the sub-batch by either adding small trim portion into the batch from the buffer conveyor, or removing trim from the weighing hopper and put it back to the buffer conveyor, until the exact weight target for the sub-batch has been reached.

The trim parameter determining apparatus (TPDA) comprises an X-ray machine.

In a second aspect of the invention a method for processing of meat trim products according to claim 11 is provided, where the meat trim products are conveyed as a sequence of collections of trim (COTs) on a conveyor means, each COT comprising at least one meat trim product, the method comprising:
- determining a weight of the incoming COTs,
- determining a fat/meat relationship for the incoming COTSs by means of an X-ray machine,
- transferring each of incoming COTs to one of a plurality of receiver stations arranged along the conveyor means, where the transferring is controlled by a control unit that utilizes the determined fat/meat relationship and the determined weight of the incoming COTs to complete target batches at the receiver stations that fulfill one or more predetermined criteria including a predetermined fat/meat relationship target,
where each of the receiver station comprises a receiver means and a buffer means arranged between the conveyor means and the receiver means, the method further comprising: accumulating incoming COTs from the conveyor means such that one or more predetermined criteria including a predetermined fat/meat relationship target at the selected receiver station is fulfilled, where transferring of the COTs to the receiver means is performed via the buffer means and where, at the receiver means, the batch is divided into a plurality of sub-batches.

The method of the second aspect may advantageously be peformed by using the system according to the first aspect of the invention.

The order in which the weight of the incoming COTs is determined and the fat/meat relationship is determined is not of relevance, e.g. the fat/meat relationship may just as well be determined first, or the fat/meat relationship and the weight of the COTs may be determined simultaneously.

In one embodiment, the one or more predetermined criteria of the batches further includes a weight target.

In one embodiment, the plurality of sub-batches have pre-determined weight targets. The sub-batches of pre-determined weight targets are in one embodiment generated manually by operators at the receiver stations by means of filling bags or boxes with trim from the buffer means until the pre-determined weight targets of the sub-batches is obtained.

In one embodiment, the step of transferring the COTs to a plurality of receiver stations is based on a local correctness requirements of a fat/meat relationship of the plurality of sub-batches with respect to the fat/meat relationship target of the target batch, where the higher the local correctness requirement is the closer is the fat/meat relationship within the individual sub-batches to the fat/meat relationship target of the target batch, and vice verse, the lower the local correctness requirement is the more the fat/meat relationship within the individual sub-batches is allowed to deviate from the fat/meat relationship target of the target batch.

The term local correctness may be understood as a comparison factor of the fat/meat relationship for a single sub-batch to the fat/meat relationship target of the target batch, or the average fat/meat relationship of two or more sub-batches that constitute to the total target batch. As an example, a target batch that is made of 40 sub-batches, a local correctness might be the comparison of the average fat/meat relationship for e.g. 10 sub-batches with the fat/meat relationship target for the whole batch. A low local correctness then indicates that this average fat/meat relationship does not necessarily be close to the fat/meat relationship target, but where the average of all the sub-batches is close to the fat/meat relationship target. In the same way, a high local correctness means that the average of these 10 sub-batches is close to the fat/meat relationship of the target batch.

In that way, a customer can make an order of a local correctness of the fat/meat relationship within the sub-batches, which may be of relevance where e.g. the customer uses only a part of the target batch at a time. As an example, if the fat/meat target relationship target of the whole batch of e.g. 200kg is 20% (20% fat and 80% meat) that is e.g. divided into 20 sub-batches (in e.g. plastic bags), the customer might e.g. require that the fat/meat relationship for each individual sub-batch, or the average fat/meat relationship within a group of sub-batches, to be 20% ±2%.. This may be of relevance when the customer might only want to grind a part of the whole batch at a time, e.g. 5 sub-batches, where the average fat/meat relationship is preferably as close to the fat/meat relationship target as possible. If however the customer typically grinds the entire batch at the same time, e.g. the above mentioned 200kg batch, such local correctness is typically of no relevance but the overall average of the fat/meat relationship of all the sub-batches that constitute the 200kg batch is.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
figure 1 shows a prior art Trim Management System (TMS) for processing of meat trim products,
figure 2 shows a TMS according to the present invention for processing of meat trim products,
figure 3 shows a flowchart of a method according to the present invention of processing of meat trim products,
figures 4 and 5 depicts graphically two examples of a local correctness requirement of fat/meat relationship, and
figure 6 depicts graphically where a target batch from e.g. figure 5 has been divided into 30 sub-batches which have high local correctness of fat/meat relationship.

### DESCRIPTION OF EMBODIMENTS

Figures 2 shows a Trim Management System (TMS) 200 according to the present invention for processing of meat trim products, where the meat trim products are conveyed as a sequence of collections of meat trim (COTs) 204 on a conveyor means 210, each COT comprising at least one meat trim products.

The TMS comprises a weight determining means 220 for determining the weight of the incoming COTs 204, a trim parameter determining apparatus (TPDA) 201 for determining the fat/meat relationship for the incoming COTs while being conveyed on the conveyor means 210, a plurality of receiver stations 202 arranged along a conveyor means 210 having associated diverting means 203, and a control unit 209 for transferring the COTs from the conveyor means 210 to the receiver stations 202 via activation of the diverting means, e.g. if the diverting means is separator arms via opening and closing of the separator arms 203. The conveyor means 210 in the embodiment shown here is a conveyor including a conveyor belt that may extend through the TPDA 201, i.e. the incoming COTs are being conveyed by the conveyor 210 through the TPDA while the determining of the fat/meat relationship is taking place.

The TPDA 201 comprises an X-ray apparatus. The X-ray apparatus 201 may in one embodiment also act as the weight determining means. In that way, no additional weighing units are needed since the X-ray may in relatively accurate way determine the weight of the incoming food products.

The control unit 209 may be any type of a pre-programmed computer device comprising a processor that receives data from the TPDA 201 indicating the fat/meat relationship of the incoming COTs, i.e. the CL level, where a computer program comprising instructions instructs the control unit 209 to utilize the received data relating to the fat/meat relationship and the weight of the incoming COTs to generate target batches at the receiver stations 202 that fulfill a predetermined criteria including total fat/meat relationship target of the trim. An additional target of the batches might also be the total weight target of the batches.

The receiver stations 202 comprise a receiver means 206 and a buffer means 205 arranged between the conveyor means 210 and the receiver means 206. The buffer means 205 is adapted to accumulate the incoming COTs from the conveyor means 210 via activation and deactivation of the diverting means 203, where the total accumulated COTs has a total fat/meat relationship that fulfills the fat/meat relationship target of the selected receiver station 202. The transferring of the incoming COTs to the receiver means is performed via the buffer means 205. The buffer means may in one embodiment comprise a buffer conveyor that may be operated by the control unit 209 by means of adapting the conveying speed of the buffer conveyor to e.g. the accumulated COTs at the receiver means via either halting the buffer conveyor, or adjusting the speed of the buffer conveyor to the accumulated COTs. As an example, the accumulated COTs may be located at one side of the buffer conveyor opposite to where the receiver means 206 and an operator are located. In such cases, the buffer conveyor will convey the accumulated COTs to the opposite side.

The buffer means 205 may also be a chute like structure, table and the like arranged in a declining way that provides a connection between the conveyor means 210 and the receiver means 206 so that all the incoming COTs slides down via gravity towards the receiver means 206.

The weight determining means 220 may in another embodiment be a scale such as a dynamic scale that weighs the COTs either before entering the TPDA 201, or after the TPDA 201.

The receiver means 206 includes in one embodiment a weighing hopper, where the receiver means may additionally comprise a bag- or box-mounting unit (not shown) arranged below the weighing hopper, and an openable and closeable bottom unit arranged between the bag- or box-mounting unit and the open upper end of the weighing hopper for collecting the COTs into the weighing hopper and for releasing the COTs from the weighing hopper into the bag or box.

In this embodiment, the TMS further comprises a take-away conveyor 211, 212 arranged below the weighing hopper(s) for receiving the sub-batches from the weighing hopper(s) and convey the received sub-batches away from the weighing hopper(s) as indicated by the arrows, e.g. to a packing area or to a freezer.

Other types of receiver means are also possible such as a bag or box that are e.g. resting on a static scale so as to allow an operator 207 to monitor the weight of the trim portions in the bag/box at all times.

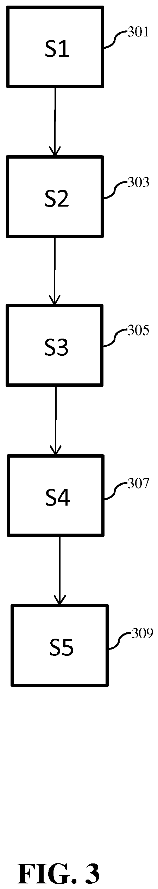

As will be discussed in more details in relation to figure 3, the batches are preferably broken into several sub-batches having a pre-determined weight target. As an example, a given batch from a given receiver station 202 may be 50kg batch, where the sub-batches have 10kg weight target meaning that the 50kg batch is divided into 5 sub-batches.

Figure 3 shows a flowchart of a method according to the present invention of processing of meat trim products, where the meat trim products are conveyed as a sequence of collections of trim (COTs) on a conveyor means, each COTs comprising at least one meat trim product.

In step (S1) 301, the weight of the incoming COTs is determined.

In step (S2) 303, the fat/meat relationship for the incoming COTs is determined by means of utilizing an X-ray apparatus as discussed in relation to figure 2.

In step (S3) 305, the COTs are transferred to plurality of receiver stations arranged along a conveyor means having associated diverting means for transferring the COTs from the conveyor means to the receiver stations. This transferring is controlled by a control unit that utilizes the determined fat/meat relationship of the COTs and the determined weight of the COTs to complete target batches at the receiver stations that fulfill a predetermined criteria including total fat/meat relationship target and preferably also the weight target.

Each of the receiver stations comprises a receiver means and a buffer means arranged between the conveyor means and the receiver means.

In one embodiment, the step of selecting the receiver stations for the COTs may additionally be based on local correctness requirements of a fat/meat relationship for the plurality of sub-batches. The local correctness requirement indicates the local correctness of at least one sub-batch with respect to the fat/meat relationship target of the target batch, i.e. how much the fat/meat relationship of the at least one sub-batch can deviate from the fat/meat relationship target of the target batch, where the higher the local correctness requirement is, the closer the fat/meat relationship within the at least one sub-batch is to the fat/meat target of the target batch, and vice verse, the lower the local correctness requirement is the more the fat/meat relationship within the individual sub-batches can deviate from the fat/meat relationship target of the target batch. In one or more sub-batches, e.g. five sub-batches, the average fat/meat relationship of the five sub-batches is determined and utilized for this local correctness requirement. As an example, a customer might order a target batch where a group of sub-batches, e.g. two or more, have a 2% local correctness tolerance from the fat/meat relationship target. Another customer might however require that each sub-batch fulfils this 2% local correctness tolerance.

In step (S4) 307, the incoming COTs are accumulated from the conveyor means having total fat/meat relationship that fulfills the fat/meat relationship target of the selected receiver station, where transferring of the COTs to the receiver means is performed via the buffer means.

In step (S5) 309, the target batches at the receiver stations are divided into two or more sub-batches having pre-determined weight target. This may be done manually by an operator at a given receiver station that creates the sub-batches of e.g. 10kg weight, simply by manually taking trim portions from the buffer means and put it into bags or boxes until the weight target of the sub-batches is obtained. As an example, the receiver means may include a weighing hopper where the operator takes trim portions from the buffer means and puts it into the weighing hopper, or from the weighing hopper back to the buffer means if the weighing exceeds the weight target of the sub-batch, until the weight target of the sub-batch is obtained. In that way, the operator can very accurately create such sub-batches that fulfill the weight target.

The weight of the COTs is not limited to the typical weight range of 1-8kg, but the weight of each individual COT may e.g. be above 10kg. Also, the weight of the trim portions that form the COTs can be several grams up to several hundred of grams. The fact that one big lump of the trim is typically at the buffer means allows the operator to finalize the sub-batches simply by picking out the appropriate trim portion to complete the weight target, e.g. few hundred grams or even less. In that way, it is possible to create identical sub-batches that have equal weights and same or similar volume, which facilitates packing the sub-batches into bags or boxes. A customer may e.g. order a fixed weight distribution of such sub-batches, e.g. 5 * 5kg and 5*7kg sub-batches etc. The bags containing the sub-batches may e.g. be vacuum packed before being packed into a box.

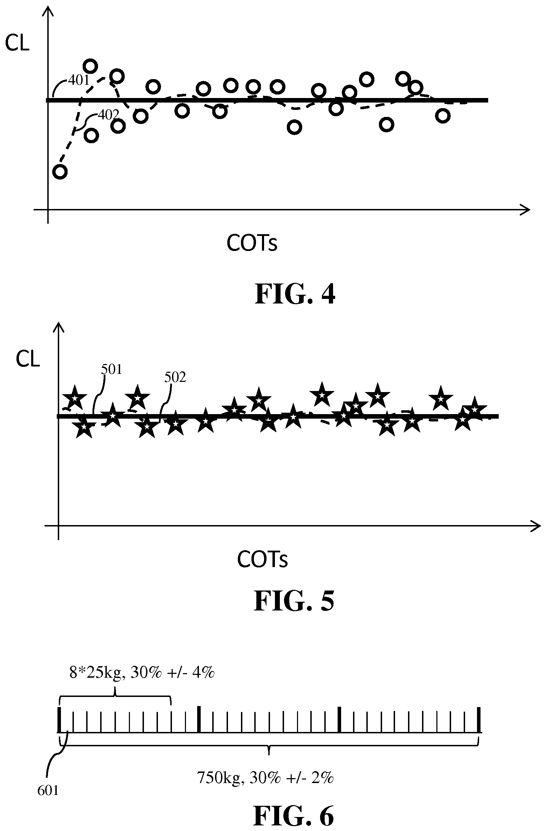

Figure 4 depicts graphically one example where the local correctness requirement is not relevant, where the vertical axis is the fat/meat relationship for incoming COTs at a given receiver station, here referred to as Chemical Level (CL), and the horizontal axis indicates the number of COTs at the receiver station. The small circles indicate the CL of incoming COTs. The dotted line 402 indicates the average CL at the receiver station. At the very beginning (starting with only one COT) there is a very much fluctuation of the incoming COTs, but in this scenario the aim is that the overall local correctness of the whole batch is as close to the CL target as possible, indicated by the straight solid line 401. This means as an example that if the CL level of the whole target batch is 20% (20% fat, 80% meat) then it is of relevance that when the whole batch of e.g. 500kg is grinded, the CL level will be as close to this CL target. However, if only part of the target batch would be ground instead of the whole batch, e.g. five 10kg sub-batches, the customer would not have any guarantee that the CL level would correspond to the CL target of 20%.

Figure 5 depicts however another scenario where the local correctness is of relevance, i.e. where such a fluctuations in the CL of the incoming COTs is not acceptable. The small asterisks indicate the CL of incoming COTs. The dotted line 502 shown here, which as discussed in relation to figure 4 is the average of the CL, is throughout the whole process very close to the target CL indicated by the straight solid line 501.

Figure 6 depicts graphically where the target batch from e.g. figure 5 has been divided into 30 sub-batches 601, where e.g. each sub-batch weighs 25kg. These sub-batches may e.g. be packed into plastic bags. In this case, the total weight of the batch is 750kg (30*25kg) and the CL target may be 30% (30% fat and 70% meat). The customer might e.g. want to use 8 sub-batches at a time, i.e. not the whole batch of 700kg. In such cases, it is important that the local correctness is close to the CL target of 30%, i.e. that the average fat/meat relationship is close to the fat/meat relationship target of the target batch. However, due to statistical reasons the uncertainty in the CL for these 8 sub-batches is higher, e.g. 4% instead of 2% for the whole batch, which may however be acceptable uncertainty by the customer.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A Trim Management System (TMS) (200) for processing of meat trim products, where the meat trim products are conveyed as a sequence of collections of trim (COTs) (204) on a conveyor means, each COT comprising at least one meat trim product, the TMS comprising:
• a trim parameter determining apparatus (TPDA) (201) for determining a fat/meat relationship for incoming COTs,
• a plurality of receiver stations (202) arranged along the conveyor means (210), each receiver station having associated diverting means (203) for transferring the incoming COTs from the conveyor means to the corresponding receiver station,
wherein each receiving station comprises a receiver means (206),
**characterized in that**
the trim parameter determining apparatus (TPDA) comprises an X-ray machine,
and **in that** the TMS further comprises
• weight determining means (220) for determining a weight of the incoming COTs (204),
• a control unit (209) for controlling the transferring of the incoming COTs from the conveyor means (210) to the receiver stations (202) via the diverting means, based on the determined fat/meat relationship and the determined weight of the incoming COTs, to complete target batches at the receiver stations that fulfill one or more predetermined criteria including a predetermined fat/meat relationship target,
and **in that** each receiver station comprises:
• a buffer means (205) arranged between the conveyor means and the receiver means, where the buffer means is adapted to accumulate the incoming COTs from the conveyor means such that a fat/meat relationship target for a target batch at the selected receiver station is fulfilled, where transferring of the incoming COTs to the receiver means is performed via the buffer means and where, at the receiver means, the batch is divided into a plurality of sub-batches.

2. A system according to claim 1, wherein at least one of the receiver means (206) comprises a weighing hopper and where the plurality of sub-batches have pre-defined weight target.

3. A system according to claim 1, wherein at least one of the receiver means (206) comprises means for generating said sub-batches based on at least one criterion.

4. A system according to claim 3, wherein said at least one pre-defined criterion comprises a pre-defined weight criterion.

5. A system according to claim 1, wherein the plurality of sub-batches have pre-defined volume target.

6. A system according to claim 2, wherein at least one of the receiver means further comprises:
• a bag- or box-mounting unit arranged below the weighing hopper, and
• an openable and closeable bottom unit arranged between the bag-or box-mounting unit and an open upper end for collecting the incoming COTs into the weighing hopper and for releasing the sub-batches from the weighing hopper into a bag or box mounted in the bag-or box-mounting unit.

7. A system according to claim 6, wherein the openable and closeable bottom unit is manually controlled.

8. A system according to any of the preceding claims, further comprising a take-away conveyor (211,212) arranged below the weighing hopper(s) for receiving the sub-batches from the weighing hopper(s) and convey the received sub-batches away from the weighing hopper(s).

9. A system according to any of the preceding claims, wherein the buffer means comprises a buffer conveyor operated by the control unit by means of adapting the conveying speed of the buffer conveyor to the accumulated weight of the trim via either halting the buffer conveyor, or adjusting the speed of the buffer conveyor.

10. A system according to any of the preceding claims, where the diverting means is selected from:
• separator arms,
• shooting conveyors, or
• openable/closeable conveyors.

11. A method of processing of meat trim products, where the meat trim products are conveyed as a sequence of collections of trim (COTs) on a conveyor means, each COT comprising at least one trim product, the method comprising:
• determining a weight of the incoming COTs
• determining a fat/meat relationship for the incoming COTs (301) by means of an X-ray machine,
• transferring each of the incoming COTs to one of a plurality of receiver stations arranged along the conveyor means, where the transferring is controlled by a control unit that utilizes the determined fat/meat relationship and the determined weight of the incoming COTs to complete target batches at the receiver stations that fulfill one or more predetermined criteria including a predetermined fat/meat relationship target,
where each of the receiver stations comprises a receiver means and a buffer means arranged between the conveyor means and the receiver means, the method further comprising:
accumulating incoming COTs from the conveyor means such that one or more predetermined criteria including a predetermined fat/meat relationship target at the selected receiver station is fulfilled, where transferring of the COTs to the receiver means is performed via the buffer means and where, at the receiver means, the batch is divided into a plurality of sub-batches.

12. A method according to claim 11, wherein the one or more predetermined criteria of the batches further includes a weight target.

13. A method according to claim 11 or 12, wherein the plurality of sub-batches have pre-determined weight targets (307).

14. A method according to claim 13, wherein the sub-batches of pre-determined weight targets are generated manually by operators at the receiver stations by means of filling bags or boxes with trim from the buffer means until the pre-determined weight targets of the sub-batches is obtained.

15. A method according to any of the claim 11-14, wherein the step of transferring the incoming COTs to a plurality of receiver stations is based on local correctness requirements of a fat/meat relationship of the plurality of sub-batches with respect to the fat/meat relationship target of the target batch, where the higher the local correctness requirement is the closer is the fat/meat relationship within the individual sub-batches to the fat/meat relationship target of the target batch, and vice verse, the lower the local correctness requirement is the more the fat/meat relationship within the individual sub-batches is allowed to deviate from the fat/meat relationship target of the target batch.

## Patentansprüche

1. Schnittverwaltungssystem (TMS) (200) zum Verarbeiten von Fleischschnittprodukten, wobei die Fleischschnittprodukte als eine Sequenz von Schnittsammlungen (COTs) (204) auf einem Fördermittel befördert werden, wobei jede COT mindestens ein Fleischschnittprodukt umfasst, wobei das TMS Folgendes umfasst:
• eine Schnittparameterbestimmungsvorrichtung (TPDA) (201) zum Bestimmen einer Fett-Fleisch-Beziehung für ankommende COTs,
• eine Vielzahl von Empfangsstationen (202), die entlang dem Fördermittel (210) angeordnet sind, wobei mit jeder Empfangsstation ein Umleitmittel (203) zum Übergeben der ankommenden COTs vom Fördermittel an die entsprechende Empfangsstation verknüpft ist,
wobei jede Empfangsstation ein Empfangsmittel (206) umfasst,
**dadurch gekennzeichnet, dass**
die Schnittparameterbestimmungsvorrichtung (TPDA) eine Röntgenmaschine umfasst,
und dadurch, dass das TMS ferner Folgendes umfasst
• ein Gewichtsbestimmungsmittel (220) zum Bestimmen eines Gewichts der ankommenden COTs (204),
• eine Steuereinheit (209) zum Steuern der Übergabe der ankommenden COTs vom Fördermittel (210) via das Umleitmittel an die Empfangsstationen (202) auf Basis der bestimmten Fett-Fleisch-Beziehung und des bestimmten Gewichts der ankommenden COTs, um Sollchargen an den Empfangsstationen zu vervollständigen, die ein oder mehrere vorbestimmte Kriterien, die eine vorbestimmte Fett-Fleisch-Sollbeziehung beinhalten, erfüllen,
und dadurch, dass jede Empfangsstation Folgendes umfasst:
• ein Puffermittel (205), das zwischen dem Fördermittel und dem Empfangsmittel angeordnet ist, wo das Puffermittel angepasst ist, die ankommenden COTs vom Fördermittel derart zu sammeln, dass eine Fett-Fleisch-Sollbeziehung für eine Sollcharge an der ausgewählten Empfangsstation erfüllt ist, wo das Übergeben der ankommenden COTs an das Empfangsmittel via die Puffermittel durchgeführt wird und wo die Charge am Empfangsmittel in eine Vielzahl von Unterchargen geteilt wird.

2. System nach Anspruch 1, wobei mindestens eines der Empfangsmittel (206) einen Wiegetrichter umfasst und wo die Vielzahl von Unterchargen ein vordefiniertes Sollgewicht aufweist.

3. System nach Anspruch 1, wobei mindestens eines der Empfangsmittel (206) ein Mittel zum Erzeugen der Unterchargen auf Basis mindestens eines Kriteriums umfasst.

4. System nach Anspruch 3, wobei das mindestens eine vordefinierte kriterium ein vordefinierte Gewichtskriterium umfasst.

5. System nach Anspruch 1, wobei die Vielzahl von Unterchargen ein vordefiniertes Sollvolumen aufweist.

6. System nach Anspruch 2, wobei mindestens eines der Empfangsmittel ferner Folgendes umfasst:
• eine Beutel- oder Boxmontageeinheit, die unter dem Wiegetrichter angeordnet ist, und
• eine offenbare und schließbare Bodeneinheit, die zwischen der Beutel- oder Boxmontageeinheit und einem offenen oberen Ende zum Aufnehmen der ankommenden COTs in den Wiegetrichter und zum Freigeben der Unterchargen aus dem Wiegetrichter in einen Beutel oder eine Box, der bzw. die in der Beutel- oder Boxmontageeinheit montiert ist, angeordnet ist.

7. System nach Anspruch 6, wobei die öffenbare und schließbare Bodeneinheit manuell gesteuert wird.

8. System nach einem der vorhergehenden Ansprüche, das ferner einen Mitnahmeförderer (211, 212) umfasst, der zum Empfangen der Unterchargen aus dem (den) Wiegetrichter(n) und Fördern der empfangenen Unterchargen vom (von den) wiegetrichter(n) weg unter dem (den) Wiegetrichter(n) angeordnet ist.

9. System nach einem der vorhergehenden Ansprüche, wobei das Puffermittel einen Pufferförderer umfasst, der durch die Steuereinheit mittels Anpassen der Fördergeschwindigkeit des Pufferförderers an das gesammelte Schnittgewicht via entweder Anhalten des Pufferförderers oder Angleichen der Geschwindigkeit des Pufferförderers betrieben wird.

10. System nach einem der vorhergehenden Ansprüche, wo das Umleitmittel ausgewählt ist aus:
• Trennarmen,
• Schussförderern oder
• öffenbaren/schließbaren Förderern.

11. Verfahren zum Verarbeiten von Fleischschnittprodukten, wobei die Fleischschnittprodukte als eine Sequenz von Schnittsammlungen (COTs) auf einem Fördermittel befördert werden, wobei jede COT mindestens ein Schnittprodukt umfasst, wobei das Verfahren Folgendes umfasst:
• Bestimmen eines Gewichts der eingehenden COTs
• Bestimmen einer Fett-Fleisch-Beziehung für die ankommenden COTs (301) mittels einer Röntgenmaschine,
• Übergeben jeder der ankommenden COTs an eine einer Vielzahl von Empfangsstationen, die entlang den Fördermitteln angeordnet sind, wo das Übergeben durch eine Steuereinheit gesteuert wird, die die bestimmte Fett-Fleisch-Beziehung und das bestimmte Gewicht der ankommenden COTs nutzt, um Sollchargen an den Empfangsstationen zu vervollständigen, die ein oder mehrere vorbestimmte Kriterien, die eine vorbestimmte Fett-Fleisch-Sollbeziehung beinhalten, erfüllen,
wo jede der Empfangsstationen ein Empfangsmittel und ein Puffermittel, das zwischen dem Fördermittel und dem Empfangsmittel angeordnet ist, umfasst, wobei das Verfahren ferner Folgendes umfasst: Sammeln von ankommenden COTs vom Fördermittel derart, dass ein oder mehrere vorbestimmte Kriterien, die eine vorbestimmte Fett-Fleisch-Sollbeziehung beinhalten, an der ausgewählten Empfangsstation erfüllt ist, wo das Übergeben der ankommenden COTs an das Empfangsmittel via die Puffermittel durchgeführt wird und wo die Charge am Empfangsmittel in eine Vielzahl von Unterchargen geteilt wird.

12. Verfahren nach Anspruch 11, wo das eine oder die mehreren vorbestimmten Kriterien der Chargen ferner ein Sollgewicht beinhaltet.

13. Verfahren nach Anspruch 11 oder 12, wobei die Vielzahl von Unterchargen vorbestimmte Sollgewichte (307) aufweisen.

14. Verfahren nach Anspruch 13, wobei die Unterchargen von vorbestimmten Sollgewichten durch Füllen von Beuteln oder Boxen mit Schnitt aus dem Puffermittel, bis die vorbestimmten Sollgewichte der Unterchargen erhalten sind, an den Empfangsstationen manuell von Bedienern erzeugt werden.

15. Verfahren nach einem der Ansprüche 11 - 14, wobei der Schritt des Übergebens der ankommenden COTs an eine Vielzahl von Empfangsstationen auf lokalen Korrektheitsanforderungen einer Fett-Fleisch-Beziehung der Vielzahl von Unterchargen mit Bezug auf die Fett-Fleisch-Sollbeziehung der Sollcharge basiert, wo, je höher die lokale Korrektheitsanforderung ist, die Fett-Fleisch-Beziehung innerhalb der einzelnen Unterchargen zur Fett-Fleisch-Sollbeziehung der Sollcharge umso enger ist, und umgekehrt, je niedriger die lokale Korrektheitsanforderung ist, die Fett-Fleisch-Beziehung innerhalb der einzelnen Unterchargen umso mehr von der Fett-Fleisch-Sollbeziehung der Sollcharge abweichen darf.

## Revendications

1. Système de Gestion de Chutes de Parage (TMS) (200) pour traiter des produits de chutes de parage de viande, dans lequel les produits de chutes de parage de viande sont transportés en tant qu'une séquence de collectes de chutes de parage (COT) (204) sur un moyen de transport, chaque COT comprenant au moins un produit de chute de parage de viande, le TMS comprenant :
• un appareil déterminant des paramètres de chute de parage (TPDA) (201) pour déterminer un rapport gras/viande pour les COT entrantes,
• une pluralité de postes récepteurs (202) agencés le long du moyen de transport (210), chaque poste récepteur ayant un moyen de déviation associé (203) pour transférer les COT entrantes venant du moyen de transport vers le poste récepteur correspondant,
dans lequel chaque poste récepteur comprend un moyen récepteur (206),
**caractérisé en ce que**
l'appareil déterminant des paramètres de chute de parage (TPDA) comprend une machine à rayons X,
et **en ce que** le TMS comprend en outre :
• un moyen de détermination du poids (220) pour déterminer un poids des COT (204) entrantes,
• une unité de commande (209) pour commander le transfert des COT entrantes venant du moyen de transport (210) vers les postes récepteurs (202) par le biais du moyen de déviation, en se basant sur le rapport gras/viande déterminé et le poids déterminé des COT entrantes, pour compléter des lots cibles sur les postes récepteurs qui remplissent un ou plusieurs critère(s) prédéterminé(s) incluant une cible de rapport gras/viande prédéterminée,
et **en ce que** chaque poste récepteur comprend :
• un moyen tampon (205) agencé entre le moyen de transport et le moyen récepteur, dans lequel le moyen tampon est adapté pour accumuler les COT entrantes venant du moyen de transport de telle façon qu'une cible de rapport gras/viande pour un lot cible sur le poste récepteur sélectionné soit remplie, dans lequel le transfert des COT entrantes vers le moyen récepteur est effectué par le biais du moyen tampon et dans lequel, sur le moyen récepteur, le lot est divisé en une pluralité de sous-lots.

2. Système selon la revendication 1, dans lequel au moins un des moyens récepteurs (206) comprend une trémie de pesée et dans lequel la pluralité de sous-lots ont une cible de poids pré-définie.

3. Système selon la revendication 1, dans lequel au moins un des moyens récepteurs (206) comprend un moyen pour générer lesdits sous-lots en se basant sur au moins un critère.

4. Système selon la revendication 3, dans lequel ledit/ladite au moins un critère pré-défini comprend un critère de poids pré-défini.

5. Système selon la revendication 1, dans lequel la pluralité de sous-lots ont une cible de volume pré-définie.

6. Système selon la revendication 2, dans lequel au moins un des moyens récepteurs comprend en outre :
• une unité de montage de sachets ou de boites agencée en-dessous de la trémie de pesée, et
• une unité inférieure pouvant être ouverte et fermée agencée entre l'unité de montage de sachets ou de boites et une extrémité supérieure ouverte pour collecter les COT entrantes jusque dans la trémie de pesée et pour libérer les sous-lots de la trémie de pesée jusque dans un sachet ou une boite monté(e) dans l'unité de montage de sachets ou de boites.

7. Système selon la revendication 6, dans lequel l'unité inférieure pouvant être ouverte et fermée est commandée manuellement.

8. Système selon l'une quelconque des revendications précédentes, comprenant en outre un convoyeur d'enlèvement (211, 212) agencé en-dessous de la/des trémie(s) de pesée pour recevoir les sous-lots de la/des trémie(s) de pesée et transporter les sous-lots reçus à distance de la/des trémie(s) de pesée.

9. Système selon l'une quelconque des revendications précédentes, dans lequel le moyen tampon comprend un convoyeur tampon actionné par l'unité de commande par adaptation de la vitesse de transport du convoyeur tampon au poids accumulé de la chute de parage, soit par l'arrêt du convoyeur tampon, soit par l'ajustement de la vitesse du convoyeur tampon.

10. Système selon l'une quelconque des revendications précédentes, dans lequel le moyen de déviation est sélectionné parmi :
• des bras séparateurs,
• des convoyeurs d'évacuation, ou
• des convoyeurs pouvant être ouverts/fermés.

11. Procédé de traitement de produits de chutes de parage de viande, dans lequel les produits de chutes de parage de viande sont transportés en tant qu'une séquence de collectes de chutes de parage (COT) sur un moyen de transport, chaque COT comprenant au moins un produit de chute de parage de viande, le procédé comprenant :
• de déterminer un poids des COT entrantes,
• de déterminer un rapport gras/viande pour les COT (301) entrantes au moyen d'une machine à rayons X,
• de transférer chacune des COT entrantes vers l'un d'une pluralité de postes récepteurs agencés le long du moyen de transport, dans lequel le transfert est commandé par une unité de commande qui utilise le rapport gras/viande déterminé et le poids déterminé des COT entrantes, pour compléter des lots cibles sur les postes récepteurs qui remplissent un ou plusieurs critère(s) prédéterminé(s) incluant une cible de rapport gras/viande prédéterminée,
dans lequel chaque poste récepteur comprend un moyen récepteur et un moyen tampon agencé entre le moyen de transport et le moyen récepteur, le procédé comprenant en outre :
d'accumuler les COT entrantes venant du moyen de transport de telle façon qu'un ou plusieurs critère(s) prédéterminé(s) incluant une cible de rapport gras/viande prédéterminée sur le poste récepteur sélectionné soit remplie, dans lequel le transfert des COT vers le moyen récepteur est effectué par le biais du moyen tampon et dans lequel, sur le moyen récepteur, le lot est divisé en une pluralité de sous-lots.

12. Procédé selon la revendication 11, dans lequel le ou les critère(s) prédéterminé(s) des lots inclu(en)t en outre une cible de poids.

13. Procédé selon la revendication 11 ou 12, dans lequel la pluralité de sous-lots a des cibles de poids prédéterminées (307).

14. Procédé selon la revendication 13, dans lequel les sous-lots de cibles de poids prédéterminées sont générés manuellement par des opérateurs sur les postes récepteurs au moyen de sachets ou de boites de remplissage avec des chutes de parage venant du moyen tampon jusqu'à ce que les cibles de poids prédéterminées des sous-lots soient obtenues.

15. Procédé selon l'une quelconque des revendications 11 - 14, dans lequel l'étape de transférer les COT entrantes vers une pluralité de postes récepteurs est basée sur des exigences d'exactitude locale d'un rapport gras/viande de la pluralité de sous-lots par rapport à la cible de rapport gras/viande du lot cible, dans lequel plus l'exigence d'exactitude locale est élevée, plus le rapport gras/viande à l'intérieur des sous-lots individuels est proche de la cible de rapport gras/viande du lot cible, et vice-versa, plus l'exigence d'exactitude locale est faible, plus le rapport gras/viande à l'intérieur des sous-lots individuels peut dévier de la cible de rapport gras/viande du lot cible.
